**Europäisches Patentamt**

(19) **European Patent Office**

**Office européen des brevets**

(11) Veröffentlichungsnummer: **0 011 138**
**B1**

(12) # EUROPÄISCHE PATENTSCHRIFT

(45) Veröffentlichungstag der Patentschrift:
**27.04.83**

(51) Int. Cl.³: **F 24 J 3/02**, F 28 F 1/12

(21) Anmeldenummer: **79103939.9**

(22) Anmeldetag: **12.10.79**

(54) **Bauelement für einen Wärmeaustauscher.**

(30) Priorität: **10.11.78 DE 2848796**

(43) Veröffentlichungstag der Anmeldung:
**28.05.80 Patentblatt 80/11**

(45) Bekanntmachung des Hinweises auf die Patenterteilung:
**27.04.83 Patentblatt 83/17**

(84) Benannte Vertragsstaaten:
**AT BE CH FR GB IT NL SE**

(56) Entgegenhaltungen:
**DE-A-2 309 307**
**DE-A-2 701 748**
**DE-A-2 702 938**
**DE-A-2 702 939**
**DE-A-2 711 058**
**FR-A-2 302 489**
**FR-A-2 331 756**
**FR-A-2 354 427**
**FR-A-2 385 055**
**FR-A-2 417 730**
**US-A-4 027 652**
**US-A-4 029 080**

(73) Patentinhaber: **BROWN, BOVERI & CIE**
**Aktiengesellschaft Mannheim, Kallstadter Strasse 1,**
**D-6800 Mannheim Käfertal (DE)**

(72) Erfinder: **Heidtmann, Uwe, Ing. grad., Bunsenstrasse 4,**
**D-6901 Nussloch (DE)**

(74) Vertreter: **Kempe, Wolfgang, Dr. et al, c/o Brown, Boveri**
**& Cie AG Postfach 351, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Bauelement für einen Wärmeaustauscher

Die Erfindung bezieht sich auf ein Bauelement für einen Wärmeaustauscher, der für den Wärmeaustausch zwischen der Umgebung und einer Flüssigkeit vorgesehen ist, mit wenigstens einer Austauschfläche, die von mindestens einem für die Aufnahme der Flüssigkeit vorgesehenen Rohr getragen ist und mit diesem in wärmeleitender Verbindung steht, wobei die Austauschfläche von mehreren in Reihe nebeneinander angeordneten, am Rohr befestigten Plattenelementen gebildet ist, die sich in aneinandergrenzenden Bereichen überdecken.

Ein bekannter Wärmeaustauscher (DE-A-2 702 939) dient als Blechabdeckung für ein Dach und weist im Querschnitt S-förmig oder doppel-S-förmig gekrümmte Plattenelemente auf. Die Krümmungsbereiche dieser Plattenelemente sind jeweils lose in ein Rohr eingehängt und zur Befestigung quer zur Rohrachse verspannt. Die Plattenelemente liegen hierbei sich überdeckend dicht aufeinander. Hierdurch wird zwar bestimmungsgemäss eine dichte Abdeckung erreicht, jedoch gleichzeitig eine Beaufschlagung der Rückseite der Plattenelemente mit Umgebungsluft erschwert, so dass die Aufnahmefähigkeit von Umgebungswärme insbesondere in Form von Luftwärme gering ist.

Ausgehend von diesem Stand der Technik liegt unserer Erfindung nun die Aufgabe zugrunde, ein Bauelement anzugeben, das bei einfachem und kostengünstigem Aufbau universell einsetzbar und besonders gut zur Aufnahme von Luftwärme und/oder Sonnenwärme geeignet ist. Darüber hinaus soll das Bauelement bezüglich seines temperaturbedingten Ausdehnungsverhaltens problemlos sein.

Die Lösung dieser Aufgabe besteht erfindungsgemäss darin, dass im Überdeckungsbereich der Plattenelemente jeweils ein Spalt vorgesehen und zwischen einer Aufbiegung des überdeckenden Plattenelementes und dem überdeckten Plattenelement gebildet ist, und dass zwischen dem Ende des überdeckten Plattenelementes und der Wurzel der Aufbiegung des überdeckenden Plattenelementes ein Zwischenraum vorgesehen ist.

Das überdeckende Plattenelement weist also im Überdeckungsbereich eine Aufbiegung auf, so dass ein keilförmiger Spalt zwischen den beiden Plattenelementen gebildet ist. Dieser ergibt im Zusammenwirken mit dem Zwischenraum die Möglichkeit für den Durchtritt von Luft von der Vorderseite zur Rückseite der Wärmetauschfläche in mehreren Bereichen, wodurch der Wärmeaustausch wirkungsvoll unterstützt wird. Hierbei überdeckt die Aufbiegung den Zwischenraum, so dass beim Einsatz im Freien kein Regen oder Schnee auf die Rückseite der Wärmeaustauschfläche gelangen kann, und sich somit eine hinreichend dichte Austauschfläche von maximaler Grösse bei vorgegebenem Umriss ergibt. Die Anordnung des Zwischenraums berücksichtigt darüber hinaus noch das Ausdehnungsverhalten des Bauelements. Denn dieser Zwischenraum stellt eine Unterbrechung der Wärmeaustauschfläche dar, so dass eine Ausgleichsmöglichkeit für eine unterschiedliche Materialausdehnung von Rohr und Austauschfläche gegeben ist. Verkrümmungen, Verwerfungen oder Risse in der Befestigung zwischen Rohr und Plattenelementen sind somit vermieden.

Eine empfehlenswerte Weiterbildung der Erfindung kann darin bestehen, dass die Aufbiegung unter einem solchen Winkel α zum Plattenelement verläuft, dass bei geneigter Anordnung der Austauschfläche, z.B. auf einem Steildach, Regenwasser von der in Richtung der Dachneigung zeigenden Aufbiegung ohne Staubildung auf das überdeckte Plattenelement abläuft.

Um den Überdeckungsbereich gegen das Eindringen von Regenwasser weiter abzusichern, ist es vorteilhaft, wenn die Aufbiegung eine etwa parallel zum überdeckten Plattenelement verlaufende Verlängerung aufweist.

Zum gleichen Zwecke ist es empfehlenswert, dass am Ende der Aufbiegung bzw. Verlängerung eine zum überdeckten Plattenelement zeigende Wassernase angeordnet ist.

Eine andere vorteilhafte Weiterbildung der Erfindung kann darin bestehen, dass im Zwischenraum an einigen Rohren Rohrschellen angeordnet sind, an denen jeweils ein in Richtung des überdeckten Plattenelementes offener Bügel für die Festlegung des Bauelements an Gebäuden vorgesehen ist.

Weitere Vorteile und empfehlenswerte Merkmale der Erfindung gehen aus der folgenden Beschreibung von Ausführungsbeispielen im Zusammenhang mit den schematischen Zeichnungen hervor.

Hierbei zeigen:

Fig. 1 ein Bauelement gemäss der Erfindung mit im wesentlichen ebenen Plattenelementen in perspektivischer Ansicht,

Fig. 2 die Einzelheit II der Fig. 1 in Seitenansicht und in vergrösserter Darstellung,

Fig. 3 eine Ausführungsvariante des Gegenstands der Fig. 2.

Gleiche Teile sind in den einzelnen Figuren mit gleichen Bezugszeichen versehen.

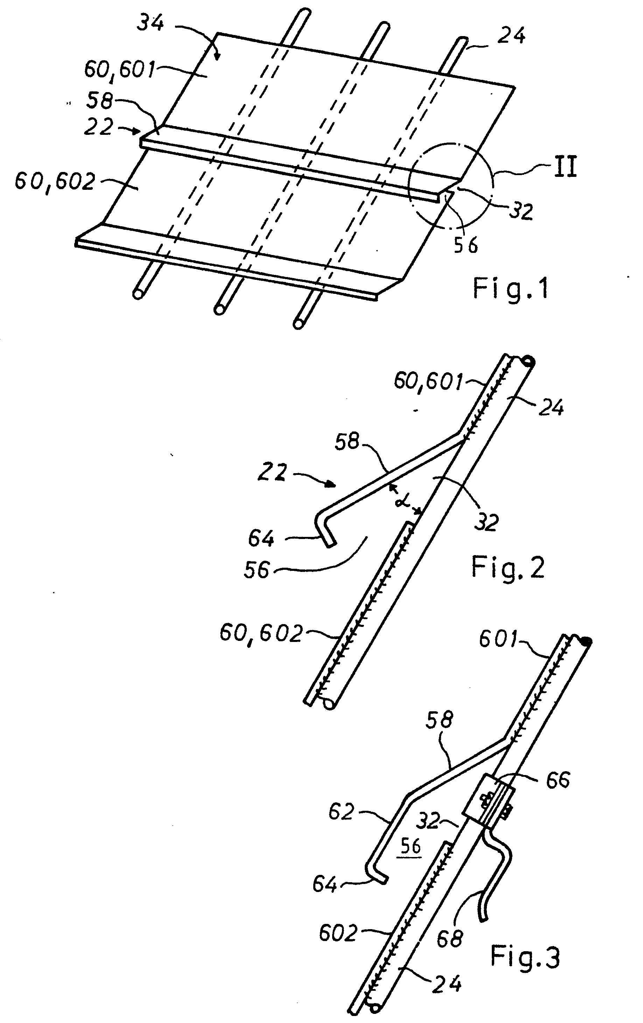

Das Bauelement gemäss dem Ausführungsbeispiel nach Fig. 1 weist zwei im wesentlichen ebene Plattenelemente 60 auf von rechteckiger Form, welche die Austauschfläche 34 bilden. In aneinandergrenzenden Bereichen überdecken sich die einzelnen Plattenelemente 60 und bilden den Überdeckungsbereich 22. Der Zusammenhalt des Bauelements wird durch Rohre 24 bewirkt, die auf der Rückseite des Bauelements verlaufen und an denen die einzelnen Plattenelemente 60 jeweils durchgehend und gut wärmeleitend befestigt sind. Wie aus Fig. 1 ersichtlich, sind die Plattenelemente 60 so nebeneinander angeordnet, dass sich ihre Längsseiten überdecken, wobei die geraden Rohre 24 etwa parallel zu den Schmalseiten der Plattenelemente 60 verlaufen und gleichmässig verteilt angeordnet sind. Der Abstand der Rohre beträgt etwa 10 bis 30 cm, das Profil der Rohre kann beliebig sein, vorzugsweise ist es jedoch rund.

Im Überdeckungsbereich 22 ist zwischen den Plattenelementen ein Spalt 56 vorgesehen, der zwischen einer Aufbiegung 58 des überdeckenden Plattenelements 601 und dem überdeckten Plattenelement 602 gebildet ist. Diese Ausgestaltung des Überdeckungsbereichs 22 ist aus Fig. 2 genauer zu erkennen, welche die Einzelheit II der Fig. 1 in Seitenansicht und vergrössert darstellt. Der Winkel α, unter welcher die Aufbiegung 58 zum Rohr 24 verläuft, ist so gewählt, dass bei einer Anordnung des Bauelements auf einem üblichen Steildach das auftreffende Regenwasser ohne Staubildung über die Aufbiegung auf das überdeckte Plattenelement 602 abläuft. Um hierbei ein Zurücklaufen des Wassers an der Unterseite der Aufbiegung 58 zu verhindern, ist am Ende der Aufbiegung 58 eine etwa rechtwinklig verlaufende Wassernase 64 in Form einer Abkantung vorgesehen. Zusätzlich ist zwischen dem überdeckten Plattenelement 602 und der Wurzel der Aufbiegung des überdeckenden Plattenelements 601 der Zwischenraum 32 vorgesehen.

Fig. 3 zeigt eine Ausführungsvariante des Gegenstands der Fig. 2. Hierbei weist die Aufbiegung 58 an ihrem Endbereich eine etwa parallel zum überdeckten Plattenelement 602 verlaufende ebene Verlängerung 62 auf, die mit der Wassernase 64 versehen ist. Diese Ausführungsform verleiht der Wärmeaustauschfläche ein gefälligeres Aussehen und verbessert gleichzeitig deren Regendichtheit.

Im Zwischenraum 32 sind an einigen Rohren 24 Rohrschellen 66 angeordnet, an denen jeweils ein nach unten offener klammerartiger Bügel 68 befestigt ist. Dieser Bügel dient zur Festlegung des Bauelements an Gebäuden durch Einhängen dieses Bügels in querverlaufende Stäbe oder Latten. Auch nehmen die Bügel Wärme auf und geben sie an die Rohre 24 ab.

Um mit einem solchen Bauelement bzw. Wärmeaustauscher Umgebungswärme, z.B. für Heizzwecke, aufnehmen zu können, wird dieses an der Aussenseite von Gebäuden, insbesondere in sonnenbestrahlten Bereichen angeordnet. Da das Bauelement regendicht ist, kann es vorzugsweise an Stelle von z.B. Ziegeln für die Eindeckung von Gebäuden verwendet werden, wobei mehrere nebeneinander angeordnete Bauelemente vorgesehen sein können, die durch Zwischenstücke regendicht miteinander verbunden sind. Die Enden der Rohre 24 werden an Sammelleitungen angeschlossen, welche die Zufuhr und Abfuhr eines Wärmeträgers, z.B. Wasser, übernehmen. Die von den Plattenelementen 60 gebildete Austauschfläche 34 nimmt Umgebungswärme auf, leitet diese zu den Rohren 24 und der durchströmende Wärmeträger führt die aufgenommene Wärme der Heizungsanlage zu. Ist hierbei der Wärmeträger sehr kalt (z.B. unter Aussenlufttemperatur), wie dies bei der Einschaltung der Bauelemente in einen Wärmepumpenkreislauf der Fall sein kann, und sind die Austauschflächen der Sonnenstrahlung ausgesetzt, das heisst verhältnismässig heiss (etwa 65 Grad Celsius), so entstehen Ausdehnungsdifferenzen, die durch entsprechende Materialwahl (Aluminium für die Plattenelemente, Stahl für die Rohre) noch verstärkt oder allein ausgelöst sein können. Diese Wärmeausdehnungsunterschiede werden durch die Aufteilung der Austauschfläche in einzelne Plattenelemente im Zusammenwirken mit den Zwischenräumen 32 aufgenommen.

Die Wärmeaufnahme des erfindungsgemässen Bauelementes ist besonders hoch, denn bei einer Anordnung vor einer Wand oder auf einem Dach kann durch den Spalt 56 und den Zwischenraum 32 Aussenluft auch auf die Rückseite der Austauschfläche 34 gelangen und zur Wärmelieferung herangezogen werden. Die Ausnutzung wird noch verbessert, wenn zwischen Austauschfläche 34 und Wand bzw. Dachhaut ein ausreichender Abstand (z.B. 5 bis 10 cm) verbleibt für eine gute Zirkulation der Aussenluft entlang der Rückseite.

Die vorgenannten Vorteile kommen auch dann zum Tragen, wenn das Bauelement für die Wärmeabgabe an die Umgebung eingesetzt wird. Ein solcher Fall ist beim Einsatz des Bauelements als Kondensator einer Kühlanlage gegeben.

Die Überdeckung der einzelnen Plattenelemente beträgt etwa 3 bis 10 cm, für die Erstreckung des Zwischenraums 32 in Richtung der Rohre 24 kann ein Richtwert von 1 bis 3 cm angenommen werden.

Die Erstreckung der Plattenelemente 60 in Richtung ihrer langen Rechteckseiten, also quer zur Richtung der geraden Rohre 24, kann beliebig sein. Die kurzen Rechteckseiten der Plattenelemente, die in Richtung der Rohre 24 zeigen, weisen in jenen Bereichen, mit welchen diese an den Rohren befestigt sind, eine Länge auf von etwa 20 bis 50 cm. Für die Festlegung dieser Abmessung ist die Grösse der Ausdehnungsunterschiede zwischen dem Material der Rohre und der Austauschfläche zu berücksichtigen, bei grösseren Ausdehnungsdifferenzen wie z.B. bei einem Rohr aus Stahl und Plattenelementen aus Aluminium gegeben ist, kann als Richtwert für die maximale Befestigungslänge des Plattenelements an den Rohren 24 ein Wert von etwa 30 bis 40 cm angesetzt werden.

Die Bauelemente gemäss der Erfindung können gegebenenfalls auch gekrümmt ausgebildet sein, um z.B. gewölbte Wärmeaustauscher herstellen zu können.

**Patentansprüche**

1. Bauelement für einen Wärmeaustauscher, der für den Wärmeaustausch zwischen der Umgebung und einer Flüssigkeit vorgesehen ist, mit wenigstens einer Austauschfläche (34), die von mindestens einem für die Aufnahme der Flüssigkeit vorgesehenen Rohr (24) getragen ist und mit diesem in wärmeleitender Verbindung steht, wobei die Austauschfläche (34) von mehreren in Reihe nebeneinander angeordneten, am Rohr (24) befestigten Plattenelementen (60) gebildet ist, die sich in aneinandergrenzenden Bereichen überdecken, dadurch gekennzeichnet, dass im Überdeckungsbereich (22) der Plattenelemente (60) jeweils ein Spalt (56) vorgesehen und zwischen einer Aufbiegung (58) des überdeckenden Plattenelementes (601) und dem überdeckten Plattenelement (602) gebildet ist, und dass zwischen dem Ende des überdeckten Plattenelements (602) und der Wurzel der Aufbiegung (58) des überdeckenden Plattenelementes (601) ein Zwischenraum (32) vorgesehen ist.

2. Bauelement nach Anspruch 1, dadurch gekennzeichnet, dass die Aufbiegung (58) unter einem solchem Winkel α zum Plattenelement (601) verläuft, dass bei geneigter Anordnung der Austauschfläche (34), z.B. auf einem Steildach, Regenwasser von der in Richtung der Dachneigung zeigenden Aufbiegung (58) ohne Staubildung auf das überdeckte Plattenelement (602) abläuft.

3. Bauelement nach Anspruch 1 oder 2, dadurch gekennzeichnet, dass die Aufbiegung (58) eine etwa parallel zum überdeckten Plattenelement (602) verlaufende Verlängerung (62) aufweist.

4. Bauelement nach einem der Ansprüche 1 bis 3, dadurch gekennzeichnet, dass am Ende der Aufbiegung (58), bzw. Verlängerung (62), eine zum überdeckten Plattenelement (602) zeigende Wassernase (64) angeordnet ist.

5. Bauelement nach einem der Ansprüche 1 bis 4, dadurch gekennzeichnet, dass im Zwischenraum (32) an einigen Rohren (24) Rohrschellen (66) angeordnet sind, an denen jeweils ein in Richtung des überdeckten Plattenelements (602) offener Bügel (68) für die Festlegung des Bauelements an Gebäuden vorgesehen ist.

## Claims

1. A structural element for a heat exchanger which is provided for heat exchange between the environment and a liquid, comprising at least one exchange surface (34) which is supported by at least one pipe (24) provided for receiving the liquid and is connected thereto in a heat-conducting manner, the exchange surface (34) being formed by a plurality of plate elements (60) which are arranged next to one another in rows, are secured to the pipe (24) and overlap one another in adjoining areas, characterized in that a gap (56) is provided in each case in the overlap area (22) of the plate elements (60) and is formed between a bent-up portion (58) of the overlapping plate element (601) and the overlapped plate element (602), and an interspace (32) is provided between the end of the overlapped plate element (602) and the foot of the bent-up portion (58) of the overlapping plate element (601).

2. A structural element according to Claim 1, characterized in that the bent-up portion (58) extends at an angle to the plate element (601) such that in the case of an inclined arrangement of the exchange surface (34), e.g. on a steep roof, rain water can flow from the bent-up portion (58), which points in the direction of the roof slope, onto the overlapped plate element (602) without accumulating.

3. A structural element according to Claim 1 or 2, characterized in that the bent-up portion (58) has an elongation (62) extending approximately parallel to the overlapped plate element (602).

4. A structural element according to any one of Claims 1 to 3, characterized in that a water drip lip (64) pointing towards the overlapped plate element (602) is provided at the end of the bent-up portion (58) or of the elongation (62).

5. A structural element according to any one of Claims 1 to 4, characterized in that pipe clamps (66) are arranged in the interspace (32) on some of the pipes (24), and a clip (68) open towards the overlapped plate element (602) is provided on each said pipe clamp (66) in order to secure the structural element to a building.

## Revendications

1. Élément de structure destiné à un échangeur de chaleur qui est prévu pour un échange de chaleur entre l'environnement et un liquide, et comportant au moins une face d'échange (34) qui est supportée par au moins un tube (24) prévu pour recevoir le liquide et se trouve en communication de conduction thermique avec ce dernier, la face d'échange (34) étant constituée par plusieurs éléments de plaque (60) fixés au tuyau (24) et disposés en série l'un à côté de l'autre et qui se recouvrent dans des zones adjacentes, caractérisé en ce que, dans la zone de recouvrement (22) des éléments de plaque (60), on prévoit respectivement un intervalle (56) qui est formé entre une cambrure (58) de l'élément de plaque (601) recouvrant et l'élément de plaque (602) recouvert, et en ce qu'il est prévu un espace intermédiaire (32) entre l'extrémité de l'élément de plaque (602) recouvert et la racine de la cambrure (58) de l'élément de plaque (601) recouvrant.

2. Élément de structure selon la revendication 1, caractérisé en ce que la cambrure (58) fait un tel angle α par rapport à l'élément de plaque (601) que lorsqu'on dispose de façon inclinée la face d'échange (34), par exemple sur un toit en pente, l'eau de pluie s'écoule de la cambrure (58) regardant en direction de l'inclinaison du toit, sans accumulation sur l'élément de plaque recouvert (602).

3. Élément de structure selon la revendication 1 ou 2, caractérisé en ce que la cambrure (58) présente un prolongement (62) s'étendant à peu près parallèlement à l'élément de plaque (602) recouvert.

4. Élément de structure selon l'une des revendications 1 à 3, caractérisé en ce qu'un bec (64) destiné à l'eau regardant vers l'élément de plaque (602) recouvert est disposé à l'extrémité de la cambrure (58) ou du prolongement (62).

5. Élément de structure selon l'une des revendications 1 à 4, caractérisé en ce que dans l'espace intermédiaire (32) sont disposés sur plusieurs tubes (24) des colliers de tube (66) sur lesquels on prévoit respectivement un étrier (68) ouvert en direction de l'élément de plaque (602) recouvert et destiné à la fixation de l'élément de structure sur des bâtiments.

Fig.1

Fig.2

Fig.3